# EUROPEAN PATENT APPLICATION

(11) **EP 3 754 536 A1**
(43) Date of publication of application: **23.12.2020**
(21) Application number: 19181067.0
(22) Date of filing: 18.06.2019
(51) Int. Cl.: G06K 9/00

(54) **METHOD AND SYSTEM FOR DETECTING A DRIVING LANE**

(71) Applicant: Visteon Global Technologies, Inc., Van Buren Township, MI 48111-5711 (US)
(72) Inventor: VITORIANO, Pedro Miguel Agulhas, 2951-503 Palmela (PT)
(74) Representative: MERH-IP Matias Erny Reichl Hoffmann Patentanwälte PartG mbB

(57) **Abstract**

A method and a system for detecting a driving lane of a road is disclosed herein. The method and the system include providing image data of an image showing at least a section of a road prepared for a vehicle to drive thereon, providing reference data, analyzing the image data with respect to the reference data, and determining at least a section of a driving lane in the image based on the result of the analysis. In the method and the system, the reference data may be related to a pattern of tire-marks, such as from another vehicle. The method and the system may include an image data acquisition unit for acquiring the image data and the image and a determination unit for analyzing the image data with respect to the reference data and determining at least the section of the driving lane.

## Description

### TECHNICAL FIELD

One or more embodiments described herein relate to a method for detecting a driving lane, in particular, one or more embodiments described herein enable an improvement of a reliability of an automated driving mode of a vehicle by detection of a driving lane with a high reliability.

### BACKGROUND

Nowadays, automotive vehicles are often equipped with driver assist systems, like an adaptive cruise control system and a lane keeping assist system. In general, a driver assist system is meant to assist a driver of an automotive vehicle, such as in regard to an operation of the automotive vehicle. In this relationship, the driver assist system is subordinate to the driver of the automotive vehicle. At times, the driver assist system may provide the driver with complementary information, such as an alert based on a detection of an object. At other times, the driver assist system may perform a conditional driving act. During the conditional driving act, the driver may independently intervene to take back control of the automotive vehicle, prior to completion of the conditional driving act. Alternatively, the driver assist system may detect a condition for aborting the conditional driving act, whereby the driver assist system may proactively return control of the automotive vehicle back to the driver, prior to the completion of the conditional driving act.

### BRIEF SUMMARY OF THE INVENTION

One or more embodiments relate to a method for detecting a driving lane of a road. In this context, roads include any streets, highways, paths, tracks, carriageways, roadways, etc., that are prepared for a vehicle to drive thereon. A driving lane may be a section of a road surface that is confined for a single vehicle to drive there along in one direction. Usually, driving lanes are marked by road marks along the road indicating a demarcation to other driving lanes in the same or in the opposite driving direction.

The method may comprise the step of providing image data of an image showing at least a section of a road prepared for a vehicle to drive thereon. The image may show a section of a road, a complete road, sections of several roads, etc. The image may also show parts of an environment around the road. The image data may be provided by at least one camera or any other sensor configured to detect a road structure.

Further steps of the method may include providing reference data and analyzing the image data based on the reference data. The analysis may be executed by a computer program and may comprise comparing the reference data with the image data and/or identifying data of the image data having a significant consistency with the reference data. This data processing may include, for example, multi-resolution theory, like template matching, scale invariant feature transform (SIFT) and speed up robust filter (SURF). Further embodiments may include convoluting the image data and the reference data and searching the maximum of the result of the convolution or to apply a DFFT (discrete fast Fourier transform) on the image data and the reference data and determine the phase-shift, for example.

In one or more embodiments, the method may comprise identifying at least a section of a driving lane in the image based on the result of the analysis. This may include determining a section of the image, where the image data coincides to more than a predetermined degree with the reference data.

The reference data may be related to a predetermined pattern of tire-marks on a road surface. A tire-mark may be a mark caused by one or more tires. Specifically, the tire-marks may be the result of vehicles driving on a road and may be caused by abrasion of wheels and/or wear of the road resulting from the frequentation by vehicles. Tire-marks may occur if, for example, a road is covered by snow or sand, and a vehicle is driving thereon leaving tracks caused by the wheels.

Tire-marks in a sense of the present disclosure may also include road structures resulting from a preparation of a road surface itself, which are indicative for a driver to identify a driving lane. Non limiting examples for such structures, may include, for example, plate shape concrete sections arranged in parallel on a road surface as a pavement on which a vehicle is supposed to drive in the outback or on the country side.

In one or more embodiments, the reliability of lane detection may be improved, which thus may allow the driver assist system and/or the automated driving system to keep an automotive vehicle driving in a desired driving lane. As a result, in one or more embodiments, a reliability of a driver assist system and/or an automated driving system may be increased. Because of the increase in reliability, there may be less intervention by a driver or return of control to the driver, in the case of an active driver assist system. Similarly, because of the increase in reliability, the automated driving system may provide an increased or full autonomous experience for an occupant of an automotive vehicle. The concept of returning control to the occupant or having the occupant intervene may be eliminated.

In one or more embodiments, the method may be capable to detect tire-marks, such as from another vehicle. The another vehicle may not be present in view. However, the tire-marks may be present in view. The detection of the tire-marks may be in addition to detection of road marks, such as lane marks. Alternatively, the detection of the tire-marks may be instead of detection of road marks. In such a case, in one or more embodiments, there may be not even an attempt to detect road marks.

One or more embodiments may improve lane detection through the detection of tire-marks. For example, in inclement weather, such as during or after a snow storm, it may not be possible to detect road marks on a road. The road marks may be hidden from view due to snow covering the road (and the road markings). However, it may be possible to nevertheless detect a lane by analyzing tire-marks. The tire-marks may reveal a trail for an automotive vehicle to travel, as well as indicate the location of a lane.

According to an aspect, analyzing may include image recognition processing to determine a predetermined correspondence between the reference data and the image data.

According to a further aspect, analyzing may include Fourier transformation of the image data, Fourier transformation of the reference data and phase-shift evaluation to detect a predetermined correspondence between the reference data and the image data.

According to a further aspect, the method may comprise the step of processing the image data by low-pass and/or band-pass filtering. Preferable, a filter mask may be designed to pass information of tire-marks of a road surface and to remove other kinds of information. The filter may be linear or non-linear and finite or infinite. Non-limiting examples for filters are Chebyshev, Gauss and matched filters. Thus, recognition of the reference data in the image data may be improved by removing image information not being attributed to tire-marks.

According to a further aspect, the method may comprise a step of processing the image data to increase the contrast of the image. The contrast may be increased linearly or by any arbitrary function, which can be continuous or non-continuous. Increasing the contrast, in particular the contrast between the tire-marks and the area beyond the tire-marks may facilitate a detection of tire-marks, since the relevant data is provided clearer.

According to a further aspect, the method may comprise a step of processing the image data by adapting the size of the image and/or by removing a distortion of the image. This may have the benefit that the image data comprises only or mainly relevant data and that the image represents the environment independent of a distance to a camera and/or sensor. In the latter case, a step of scaling the reference data may be redundant.

According to a further aspect, the image data may be generated in dependence on a second image data. Some data of the second image data may be summarized by taking the mean value and/or any other modification or preconditioning may be applied. Taking the mean value of image data, which should contain the same information or very similar information may reduce noise and, thus, increase the reliability of the data.

According to a further aspect, the method may comprise a step of analyzing the image data and/or the image data of the determined section of the driving lane to reconfirm the determined section of the driving lane. Analyzing may comprise an analysis of the amplitudes of the image data. Using the method in a vehicle, the reliability of detection provided by the method may improve operation of the vehicle, such as in regard to maintaining travelling in a desired lane. The detection of unreliable results may be ensured by, for example, evaluating the amplitudes of the image data by taking a variance of the image data. If the variance of the image data is below a predetermined threshold value, the result of determining the driving lane may be considered unreliable.

According to a further aspect, the method may comprise steps of determining a horizontal scale of the image and adapting the reference data to the determined horizontal scale. This may have the effect that image data coincides to a higher degree with the reverence data and may lead to improved results of the method for detecting a lane.

The method may be carried out by a non-transitory, computer-readable medium. The non-transitory, computer-readable medium may include instructions that, when executed by a processor, cause the processor to perform the method.

One or more embodiments may relate to a system for detecting a driving lane of a road. The system may comprise an image data acquisition unit for acquiring image data of an image. The image data acquisition unit may acquire the image data by use of a camera system, or a sensor system of the vehicle.

Further, the system may comprise a determination unit for analyzing the image data based on a reference data and for determining at least a section of a driving lane in the image based on the result of the analysis, wherein the reference data is being related to a predetermined pattern of tire-marks. The reference data may be generated by a sine or a cosine function, any other function, which represents the pattern of tire-marks on a road, or, for example, may be generated from analysis of a road surface with tire-marks. It may be advantageous for the accuracy of driving lane detection that patterns of several kinds of tire-marks are provided as reference data with for example, different color and/or brightness progression. This may facilitate detecting driving lanes in several kinds of environments, like snowy, sandy, standard high-way environments. Reference data may also be provided by image data manually determined as reference data or determined by the system in previous determinations.

According to a further aspect, the analysis of the determination unit may include image recognition processing to detect the reference data in the image data.

According to a further aspect, the analysis of the determination unit may be configured for Fourier transformation of the image data, Fourier transformation of the reference data and phase-shift evaluation to detect the reference data in the image data.

According to a further aspect, the system may comprise an image processing unit configured to filter the image data by low-pass and/or band-pass filtering.

According to a further aspect, the system may comprise an image processing unit configured to increase the contrast of the image.

According to a further aspect, the system may comprise an image processing unit configured to adapt the size of the image.

According to a further aspect, the system may comprise an image processing unit configured to remove a distortion of the image.

According to a further aspect, the system may comprise an image processing unit configured to reduce the resolution of the image.

According to a further aspect, the image data may be generated in dependence on a second image data. For example, a function may be applied on the second image data to obtain the image data. An illustrating example for a such function may be to use a red component with 10 percent, to use a blue component with 90 percent and to neglect a green component of the image determined by the image data.

The image data may be the result of applying an image transformation on the second image data. Non-limiting examples for image transformations are the Haar Transform, the Hadamard Transform, the Discrete Wavelet Transform and the Karhunen-Loève Transform.

According to a further aspect, the system may comprise a control unit for analyzing the image data and/or the image of a predetermined section of the driving lane to reconfirm the determined section of the driving lane.

According to a further aspect, the system may comprise a scaling unit for determining a horizontal scale of the image data and for adapting the reference data to the determined horizontal scale.

Further details, features and advantages of implementations become apparent from the following description of embodiments with reference to the figures.

### BRIEF DESCRIPTION OF THE DRAWINGS

Figure 1 schematically illustrates a system for detecting a driving lane according to an embodiment.
Figures 2-4 schematically illustrate further systems for detecting a driving lane according to embodiments.
Figure 5 shows a process flow schematically illustrating a method according to an embodiment.
Figure 6 shows a process flow schematically illustrating a method according to an embodiment.
Figure 7 shows a process flow schematically illustrating a method according to an embodiment.
Figure 8 shows a process flow schematically illustrating a method according to an embodiment.
Figure 9 illustrate an example for image data and reference data according to an embodiment.
Figure 10 shows an example for a method for detecting a lane according to an embodiment.
Figures 11 and 12 illustrate an example for processing image data according to an embodiment.
Figure 13 shows an example for a lane, where the tire-marks are constituted by road materials according to an embodiment.
Figure 14 shows another example for image data and reference data according to an embodiment.

### DETAILED DESCRIPTION OF THE INVENTION

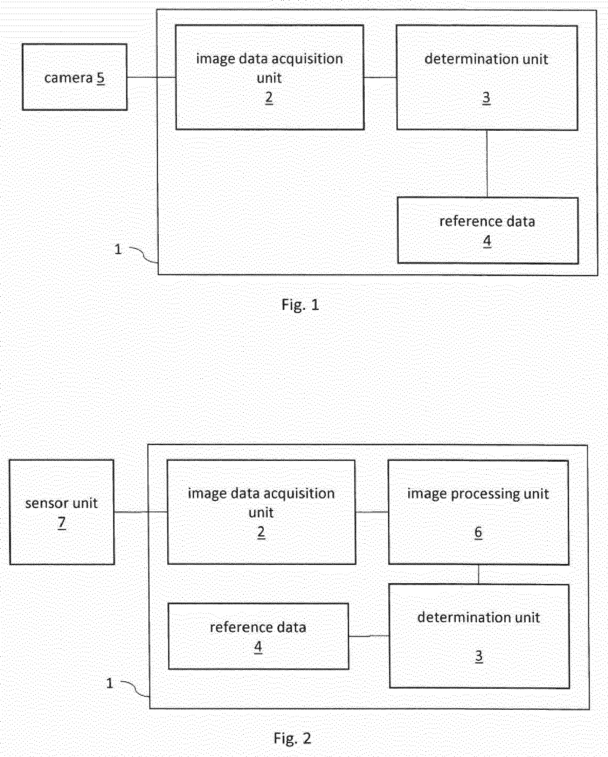

Figure 1 shows a schematic illustration of a system for detecting a driving lane according to an embodiment. The system 1 may comprise an image data acquisition unit 2 for acquiring image data and a determination unit 3 to analyze the image data with respect to reference data stored in a memory 4. The image data acquisition unit may acquire image data of a camera 5, a camera system and/or any other sensor system providing image data. Image data may also be provided for example by radar sensors, infrared sensors, etc. The image data may be also generated by measuring the height of a road at several points. The reference data may be static or adjustable and may be stored temporarily or permanent. Storage devices may be flash memories, solid state memories and other kinds of memories and storages. The reference data may be alternatively provided by any other system, for example by an Advanced Driving Assist System (ADAS) or may be stored on a server and retrieved therefrom by mobile communication, for example.

The determination unit 3 analyzes the image data with respect to the reference data. The analysis may be carried out, for example, by convoluting the image data with the reference data and finding the maximum of the result of the convolution. Another example is to apply a Fourier transformation, in particular a Discrete Fast Fourier Transformation (DFFT), on the image data and the reference data, and to determine a phase-shift between the image data in the frequency domain and the reference data in the frequency domain.

Figure 2 shows a schematic illustration of a system for detecting a driving lane according to another embodiment. In comparison to Figure 1, in the embodiment of Figure 2, additionally, an image processing unit 6 is provided. The image processing unit 6 may process the image by any kind of image processing like, filtering, change a contrast, a brightness, a resolution, a size, a distortion, and other kinds known to a person skilled in image processing. The image processing unit 6 may preprocess each image acquired by the image acquisition unit 2 to the analysis of the determination unit such that information concerning tire-marks can be extracted appropriately and out of the image by the analysis of the determination unit 3.

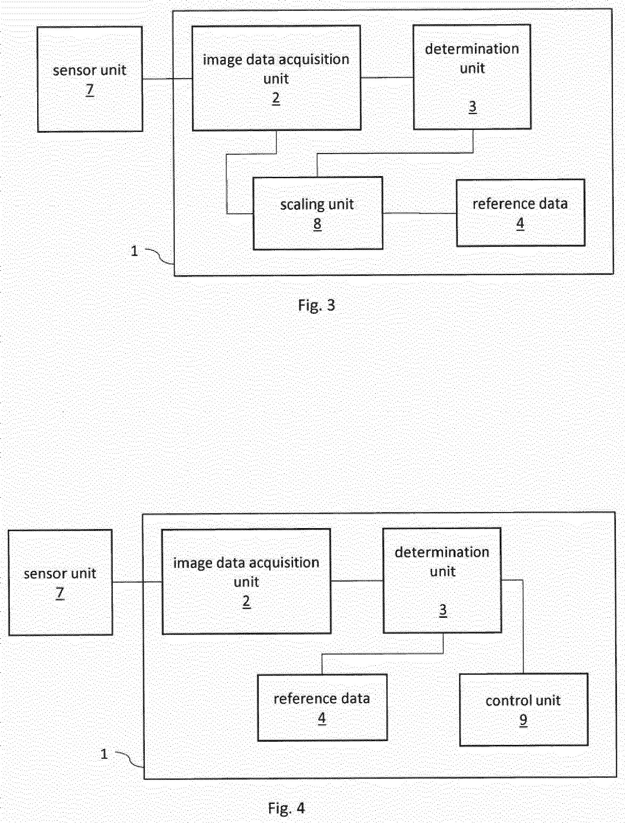

Figure 3 shows a schematic illustration of a system for detecting a driving lane according to a further embodiment. In comparison to the embodiment of Figure 1, in Figure 3, a scaling unit 8 is provided additionally. The scaling unit 8 may adapt the reference data based on the image acquired by the image data acquisition unit 2. For example, if the image data shows a driving lane being far away from a camera having a wide-angle lens and providing the image data to the image acquisition unit, the driving lane may appear small compared to a driving lane closer to the camera. Thus, it may be advantageous to consider the scaling of image regions to reality. In such a case, the scaling unit 8 may determine a scaling of an image region based on lens data, focus and/or other sensors. Based on this scaling, the scaling unit 8 may adapt the reference data. Information concerning scaling of an image region may be provided alternatively by the sensor, camera, etc. providing the image data or any other system being able to provide the scaling of the image data.

Figure 4 shows a schematic illustration of a system for detecting a driving lane according to a further embodiment. In comparison to the embodiment of Figure 1, in Figure 4, additionally, a control unit 9 is provided. The control unit may reconfirm the result of a determined driving lane in an image provided by the determination unit to avoid an unreliable detection, in particular, type 1 errors known as false detection. For example, the surface of a road is new and built with a material not providing any kinds of tire-marks. Although, there are no tire-marks in the example, the determination unit may determine a driving lane due to, for example, noise. The control unit may detect that there is no information in an image provided by a camera due to missing amplitudes. Thus, the control unit may determine the determined driving lane as a false detection. In embodiments comprising an image processing unit and a control unit, it may be beneficial to provide images from the image data acquisition unit 2 to the control unit 9 and not from the image processing unit 6, since information relating to tire-marks or appearing to relate to tire-marks is not highlighted by the image processing unit 6.

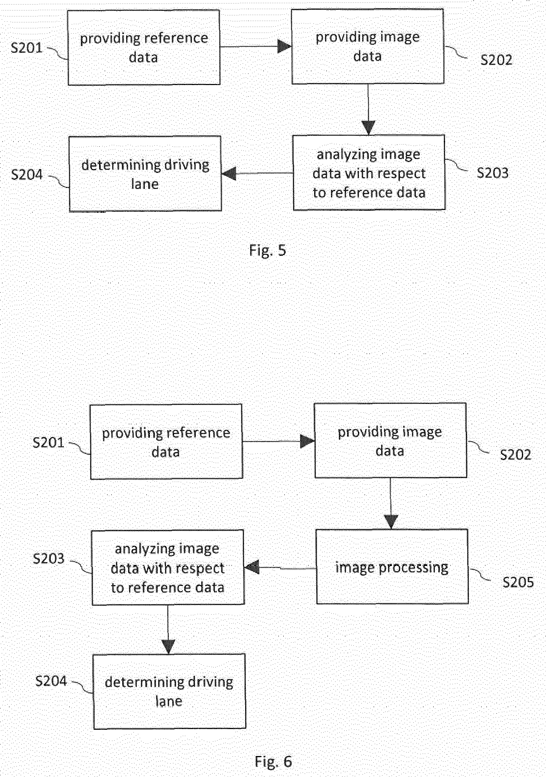

Figure 5 shows a process flow which schematically illustrates a method for operating a system for detecting a driving lane according to an embodiment. The method may be carried out by a system for detecting a driving lane as described above with reference to Figures 1-4, or by any other system. Further, it may be possible to summarize some steps, to introduce further steps, skip steps, parallelize steps, change the order of steps and to split steps without changing functionality of the described process.

In a first process step S201, a reference data is provided. The reference data comprises a predetermined pattern of tire-marks. The reference data may be a sine or a cosine, sample data from reality or any other function, which may be assumed by an expert skilled in the art to represent tire-marks on a road. The reference data may be static or may be updated to tire-marks recently detected by the system. It may also be possible to deposit several kinds of reference data to achieve in various environments appropriate results, for example, when snow or sand is on a road or the lightning of a sun causes detrimental effects.

In a second process step S202, image data is provided. The image data may be provided by a camera, a camera system, a radar sensor, a LIDAR sensor, a sensor measuring the ground, the height of the ground and/or the material of the ground. It may be also possible to combine data provided of various sensors including cameras. The image data may be generated from a further image data by applying any arbitrary function on the further image data.

In a further process step S203, image data is analyzed with respect to the reference data. The analysis may be executed with a computer program and may comprise recognizing the reference data in the image data and/or recognizing data of the image data to have a significant consistency with the reference data utilizing, for examples, algorithms from multi-resolution theory, like template matching, scale invariant feature transform (SIFT) and speed up robust filter (SURF). Other examples are to convolute the image data and the reference data and searching the maximum of the result of the convolution or to apply a DFFT on the image data and the reference data and determine the phase-shift. It may be also possible to combine the analysis with a Kalman or Particle Filter or any other predictive algorithm to improve the step of analyzing. The Kalman Filter, the Particle Filter, SIFT, SURF and/or any other algorithm may be implemented as a computer program.

In a process step S204, at least a section of a driving lane in the image data based on the result of analyzing is determined. In case of multiple detections in the analysis, determining the driving lane may be carried out for example, by applying a Kalman filter or Particle Filter, by using artificial intelligence or by selecting the detection coinciding the most with the reference signal. It may be also possible to output multiple detections. Further, possibilities for determining the driving lane may be transposed from signal processing and information theory. The result may be output based on the image data, may be output in coordinates relative to a vehicle or may be output in coordinates relative to any other point of reference or in absolute coordinates.

Figure 6 shows an embodiment illustrating a process flow based on the process flow of Figure 5, into which a further step S205 of image processing after the step S202 is included. The step of image processing may include any kind of image processing. Non-limiting examples for image processing are, adapting the size, removing a distortion, increasing the contrast, adapting the brightness, low-pass filtering, band-pass filtering, and/or any other kind of image processing.

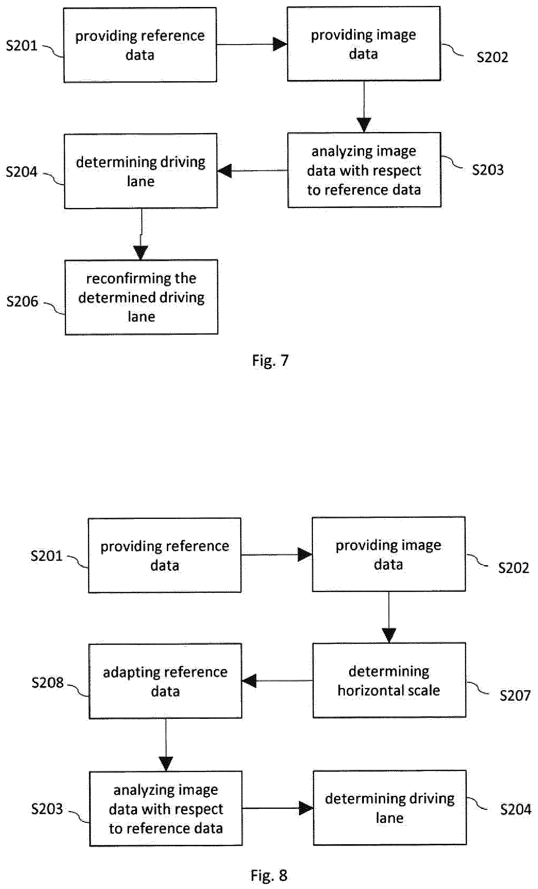

Figure 7 shows a further embodiment illustrating a process flow based on the process flow of Figure 5, into which a step S206 of reconfirming the determined driving lane is included after the process step S204. Reconfirming may be carried out by comparing the result with results of other systems, analyzing the provided image data and/or the data used for the step of analyzing S202 and/or any other method. It may be examined how much the reference data coincides with data of the image data, which is determined to coincide with the reference data. Further or alternatively, the entropy of the image data referring to a pattern of tire-marks may be examined. Validity may also be checked by analyzing the image data concerning amplitudes, the mean, standard deviation and/or any other stochastic and/or statistic value, like variance, higher mathematical moments, probability distribution, probability density, etc. In some embodiments, reliability of the determined driving lane may be reconfirmed with map data and a transformation of the determined driving lane into map data.

Figure 8 shows an embodiment illustrating a process flow based on the process flow of Figure 5, wherein a step S207 of determining a horizontal scale and a step S208 of adapting reference data are included after the step S202. The horizontal scale may be determined with the distance d between the evaluated image data in reality and the sensor, for example a camera, providing the image data and with the configuration of the sensor, for example, the focus and lens properties. A horizontal scale may also be provided through any other system or any other method. Thus, recognition of the reference data in the image data and the analysis may be improved.

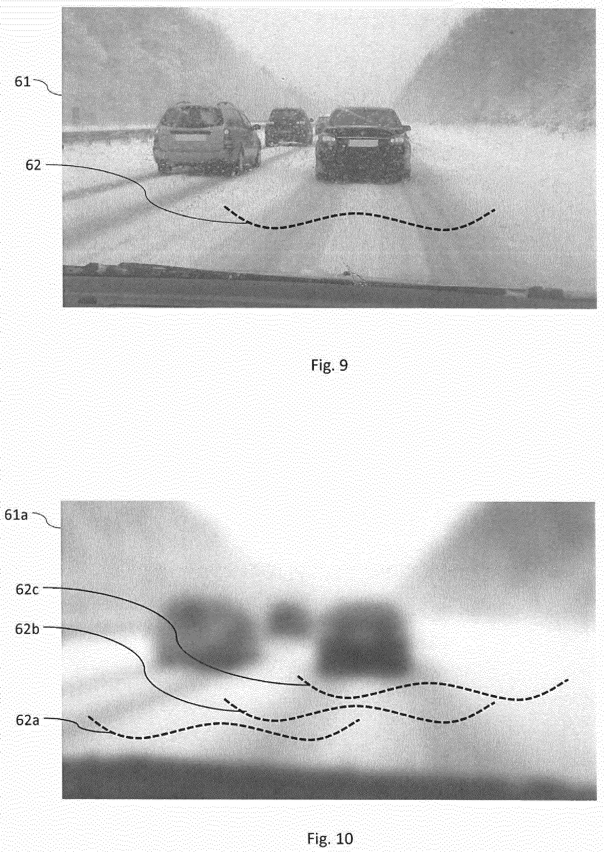

Figures 9 and 10 show an example of a reference data 62 and an image 61 provided by an image data. The image 61 provides a lot of information not related to the pattern of tire-marks as shown in Figure 9. However, the reference data 62 is still recognizable in the image 61. To improve recognition, image processing is applied on the image data. The image processing comprises increasing a contrast of the image 61 provided by the image data with a value of 40 percent and blurring with a blur radius of 50 is shown in the image 61a of Figure 10. Thus, information not concerning tire-marks is removed and recognition of the reference data 62 is improved. As an example, the reference data 62 is shown at several positions in the image 61a as curves 62a-c. It may be visible that curve 62b coincides the most with the image 61a compared to the reference data 62a and the reference data 62c.

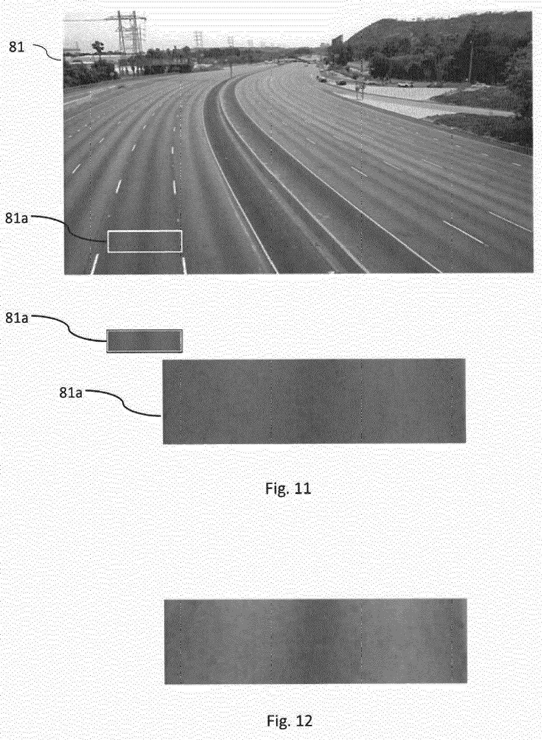

Figures 11 and 12 show another example for image data. Image data 81 of Figure 11 provides an image of a road comprising multiple lanes and opposite lanes. The section 81a of the image data 81 is a section of a single lane of the multiple lanes, where marks caused by tires are visible. To improve recognition of the tire-marks, further image processing in form of increasing brightness by 20 percent and in form of increasing contrast by 40 percent is applied. It may be also advantageous to decrease brightness of some images. The result of image data processing of image data 81 is visible in Figure 12.

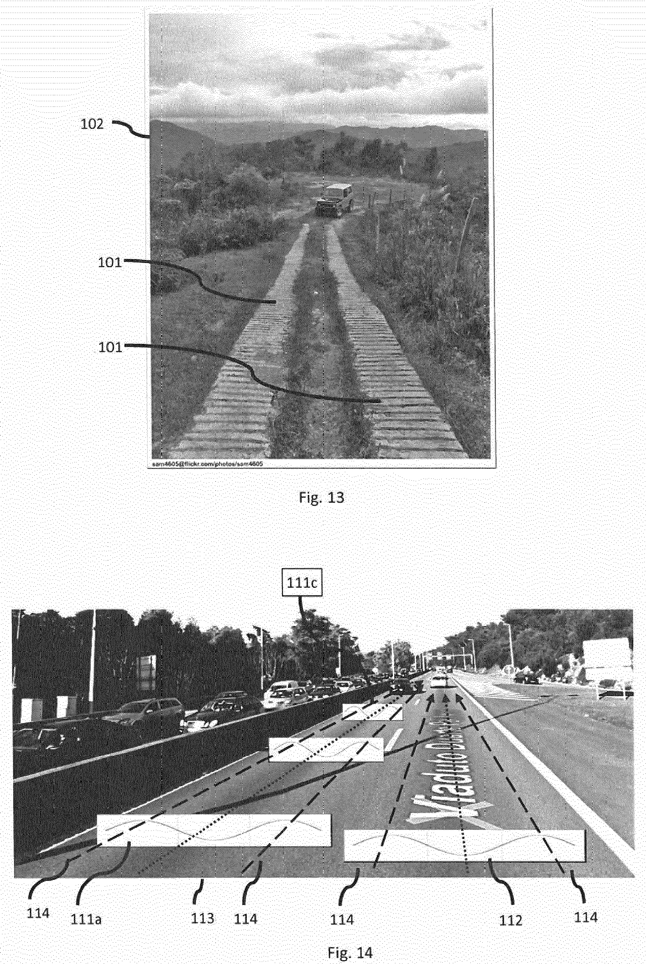

Figure 13 shows an example for image data 102, where the tire-marks 101 are prepared for tires to run thereon by use of a different material as a road pavement. In this example, tire marks result from the plate shape concrete sections arranged in parallel on a road surface orthogonally to the driving direction as a pavement on which a vehicle is supposed to drive in the outback or on the country side. In such a case it may be, in particular, advantageous to adapt the reference data periodically to the recognized driving lane. Further, it may be also advantageous to use artificial intelligence to detect the tire-marks and/or to use a Kalman filter, a Particle filter and/or any other process filter, which may be useful for tracking, in the method for detecting a driving lane.

Figure 14 shows another example for image data 113 and reference data 111a-111c; 112. In Figure 14, it is shown that an adaption of the reference data 111a-111c in dependence on the distance between the position of the sensor and the position of the image data 113 in reality may be advantageous. Further, tire-marks 114 are visible caused by a frequent usage of the driving lane by vehicles.

As shown in Figure 14, the method may be applied to detect multiple driving lanes. In some embodiments the number of driving lanes may be used for determining a driving lane. In particular, in cases of multiple detections as a result of an analysis of a determination unit are overlapping, knowledge about the number of driving lanes in combination with an adapted scaling of a reference data may cause more accurate and reliable detection results.

### REFERENCE NUMERALS

- 1: system for detecting a driving lane
- 2: image data acquisition unit
- 3: determination unit
- 4: storage for reference data
- 5: camera
- 61, 81, 102, 113: examples for image data
- 61a, 81a: results of image processing
- 62, 62a-c, 111a-c, 112: examples for reference data
- 101: example for tire-marks provided for a vehicle to drive thereon
- 114: example for tire-marks caused by a frequent usage of the lane by vehicles

## Claims

1. A method for detecting a driving lane of a road, the method comprising the steps of:
- providing image data of an image showing at least a section of a road prepared for a vehicle to drive thereon,
- providing reference data,
- analyzing the image data with respect to the reference data,
- determining at least a section of a driving lane in the image based on the result of the analysis, wherein the reference data is related to a pattern of tire-marks.

2. A method according to claim 1, wherein
the step of analyzing includes image recognition processing to detect a predetermined correspondence between the reference data and the image data.

3. A method according to claim 1, wherein
the step of analyzing includes Fourier transformation of the image data, Fourier transformation of the reference data and phase-shift evaluation to detect a predetermined correspondence between the reference data and the image data.

4. A method according to one of claims 1 to 3, comprising the step of:
- processing the image data
by low-pass and/or band-pass filtering and/or
to increase the contrast of the image and/or
by adapting the size of the image and/or
by removing a distortion of the image.

5. A method according to one of claims 1 to 4, comprising the step of:
- analyzing the image data and/or the image data of the determined section of the driving lane to reconfirm the determined section of the driving lane.

6. A method according to one of claims 1 to 5, comprising the steps of:
- determining a horizontal scale of the image,
- adapting the reference data to the determined horizontal scale.

7. A system for detecting a driving lane of a road comprising:
- an image data acquisition unit for acquiring image data of an image,
- a determination unit for analyzing the image data based on a reference data and for determining at least a section of a driving lane in the image based on the result of the analysis, wherein
the image shows at least a section of a road prepared for a vehicle to drive thereon
wherein the reference data is related to a predetermined pattern of tire-marks.

8. A system according to claim 7, wherein the analysis of the determination unit includes image recognition processing to detect the reference data in the image data.

9. A system according to claim 8, wherein the analysis of the determination unit includes Fourier transformation of the image data, Fourier transformation of the reference data and phase-shift evaluation to detect a predetermined relationship between the image data and the reference data.

10. A system according to one of claims 7 to 9, further comprising an image processing unit configured to
- filter the image data by low-pass and/or band-pass filtering and/or
- increase the contrast of the image and/or
- adapt the size of the image and/or
- remove a distortion of the image.

11. A system according to one of claims 7 to 10, further comprising a control unit for analyzing the image data and/or the image data of the determined section of the driving lane to reconfirm the determined section of the driving lane.

12. A system according to one of claims 7 to 11, further comprising a scaling unit for determining a horizontal scale of the image data and for adapting the reference data to the determined horizontal scale.
